# EUROPÄISCHE PATENTSCHRIFT

(11) **EP 1 049 621 B1**
(45) Veröffentlichungstag und Bekanntmachung des Hinweises auf die Patenterteilung: **03.09.2003**
(21) Anmeldenummer: 99906037.9
(22) Anmeldetag: 11.01.1999
(51) Int. Cl.: B63B 39/06

(54) **STABILISIERVORRICHTUNG FÜR SCHIFFSBEWEGUNGEN**
STABILISING DEVICE FOR THE MOVEMENTS OF A SHIP
DISPOSITIF DE STABILISATION POUR MOUVEMENTS D'UN BATEAU

(30) Priorität: 22.01.1998 DE 19802354
(43) Veröffentlichungstag der Anmeldung: 08.11.2000
(73) Patentinhaber: SIEMENS AKTIENGESELLSCHAFT, 80333 München (DE)
(72) Erfinder: NIGGEMANN, Dirk, D-25474 Bönningstedt (DE); ESDERS, Ulrich, D-22457 Hamburg (DE)
(86) Internationale Anmeldenummer: DE9900029
(87) Internationale Veröffentlichungsnummer: WO99037533

(56) Entgegenhaltungen:
- WO-A-93/00255
- GB-A- 1 047 263
- GB-A- 1 413 745
- US-A- 3 738 304
- US-A- 4 159 690
- US-A- 5 631 632
- TANAKA: "Automatic Measurement of Ship's Attitude by the Use of Servo-type Accelerometers" IEEE INTERNATIONAL CONFERENCE ON SYSTEMS ENGINEERING, 17. - 19. September 1992, Seiten 87-90, XP000343354 Kobe,Japan

## Beschreibung

Die Erfindung bezieht sich auf eine Stabilisiervorrichtung für Schiffsbewegungen, mit verstellbaren Stabilisierflossen, Antriebseinrichtungen, mittels denen die Position der Stabilisierflossen verstellbar ist, einer Steuereinrichtung, mittels der den Sollpositionen der jeweiligen Stabilisierflosse entsprechende Steuersignale erzeug- und an die jeweilige Antriebseinrichtung anlegbar sind, und einer Meßeinrichtung, mittels der Rollbewegungen eines Schiffes erfaß-, den erfaßten Rollbewegungen entsprechende Meßsignale erzeug- und an die Steuereinrichtung anlegbar sind, wobei die Steuereinrichtung so ausgebildet ist, daß ein Rollwinkel und eine Rollwinkelgeschwindigkeit und/oder eine Rollwinkelbeschleunigung als Meßgrößen separat erfaß- bzw. aus Meßgrößen separat ermittelbar sind, daß ein zur Kompensation der Rollbewegung des Schiffes in der Steuereinrichtung erzeugtes Steuersignal aus einer Rollwinkelkomponente und einer Rollwinkelgeschwindigkeitskomponente und/oder einer Rollwinkelbeschleunigungskomponente zusammensetzbar ist, und daß die Anteile der Rollwinkelkomponente und der Rollwinkelgeschwindigkeitskomponente und/oder der Rollwinkelbeschleunigungskomponente am Steuersignal frei vorgebbar sind.

Aus der EP 0 591 366 B1 ist eine Stabilisiervorrichtung für Schiffsbewegungen bekannt, bei der die Rollbewegungen des Schiffes ausgeglichen werden können. Hierzu wird ein für die Rollbewegung des Schiffes charakteristisches Steuersignal erzeugt, welches zu einer bestimmten Verstellung der Stabilisierflossen führt und dadurch der unerwünschten Rollbewegung des Schiffes entgegenwirkt.

Aus der GB-A-1 047 263 ist weiterhin eine Stabilisierungsvorrichtung für Schiffsbewegungen bekannt, mit der auch Rollwinkelgeschwindigkeiten und -beschleunigungen erfaßbar sind, um die Stabilisierung der Schiffsbewegungen zu verbessern.

Da die Wetterverhältnisse und damit die Anforderungen an die Stabilisiervorrichtung im hohen Maße unterschiedlich sind, ist die eingangs geschilderte Stabilisiervorrichtung nicht in der Lage, unter allen Bedingungen das sich aus den physikalischen Gegebenheiten ergebende optimale Stabilisierergebnis zu erzielen.

Der Erfindung liegt die Aufgabe zugrunde, die eingangs geschilderte Stabilisiervorrichtung für Schiffsbewegungen derart weiterzubilden, daß sie sowohl bei schwerer See wie auch bei allen anderen Witterungsbedingungen in der Lage ist, auch Stampfbewegungen des Schiffes in optimaler Weise zu reduzieren.

Diese Aufgabe wird erfindungsgemäß dadurch gelöst, daß die Stabilisiervorrichtung eine weitere Meßvorrichtung aufweist, mittels der Stampfbewegungen des Schiffes erfaß-, den erfaßten Stampfbewegungen entsprechende Meßsignale erzeug- und an die Steuereinrichtung anlegbar sind, wobei die Steuereinrichtung so ausgebildet ist, daß ein Stampfwinkel und/oder eine Stampfwinkelgeschwindigkeit und/oder eine Stampfwinkelbeschleunigung als Meßgrößen separat erfaß- bzw. aus Meßgrößen separat ermittelbar sind, daß ein zur Kompensation der Stampfbewegung des Schiffes in der Steuereinrichtung erzeugter Signalteil des Steuersignals aus einer Stampfwinkelkomponente und/oder einer Stampfwinkelgeschwindigkeitskomponente und/oder einer Stampfwinkelbeschleunigungskomponente zusammensetzbar ist, und daß die Anteile der Stampfwinkelkomponente und/oder der Stampfwinkelgeschwindigkeitskomponente und/oder der Stampfwinkelbeschleunigungskomponente am zur Kompensation der Stampfbewegung erzeugten Signalteil des Steuersignals frei vorgebbar sind. Auch hinsichtlich der Kompensation der Stampfbewegungen ist die bereits im Zusammenhang mit den Roll- und Gierbewegungen beschriebene Prioritätsschaltung mit fließenden Übergängen hinsichtlich der Reduzierung der Stampfbewegungen des Schiffes möglich.

Eine robuste Ausgestaltung der Meßeinrichtungen bei korrekter und zuverlässiger Meßsignalerzeugung wird gewährleistet, wenn zur Erfassung der Roll- und/oder Gier- und/oder der Stampfbewegungen des Schiffes dienenden Meßeinrichtungen als Beschleunigungsaufnehmer ausgebildet sind.

Für eine exakte Erfassung der Rollbewegungen des Schiffes ist es vorteilhaft, wenn die Meßeinrichtung zur Erfassung der Rollbewegung drei Beschleunigungsaufnehmer aufweist, von denen einer im Bereich der Schiffslängsachse und die beiden anderen möglichst weit backbord- bzw. steuerbordseitig angeordnet sind.

Entsprechend ist es zur Erfassung der Stampfbewegung des Schiffes vorteilhaft, wenn die hierfür vorgesehene Meßeinrichtung drei Beschleunigungsaufnehmer aufweist, von denen einer im Bereich der Schiffslängsachse und die beiden anderen möglichst weit zum Bug bzw. zum Reck des Schiffes hin versetzt angeordnet sind.

Für eine möglichst exakte Erfassung der Gierbewegung des Schiffes ist es vorteilhaft, wenn die Meßeinrichtung drei Beschleunigungsaufnehmer aufweist, von denen einer im Bereich der Schiffsquerachse und die beiden anderen möglichst weit zum Bug bzw. zum Heck des Schiffes hin versetzt angeordnet sind.

Um den Aufwand für die Meßeinrichtungen der erfindungsgemäßen Stabilisiervorrichtung möglichst zu reduzieren, ist es zweckmäßig, wenn ein oder mehrere Beschleunigungsaufnehmer so ausgebildet und angeordnet sind, daß sie zur Erfassung der Rollund/oder der Gier- und/oder der Stampfbewegung des Schiffes einsetzbar sind. Dann können mittels eines Beschleunigungsaufnehmers unterschiedliche Schiffsbewegungen erfaßt werden, wodurch die Gesamtanzahl der Beschleunigungsaufnehmer, die zur Ausbildung der Meßeinrichtungen erforderlich sind, reduziert werden kann.

Die Antriebseinrichtungen zur Verstellung der Stabilisierflossen sind zweckmäßigerweise Bestandteile einer Hydraulikanlage mit einem Speicher und einer Konstantdruckpumpe, wobei in der Steuereinrichtung der erfindungsgemäßen Stabilisiervorrichtung der aktuelle Füllungsgrad des Speichers der Hydraulikanlage als Meßgröße erfaßbar und bei der Erzeugung des Steuersignals berücksichtigbar ist. Hierdurch kann die eingangs erwähnte Prioritätsschaltung immer dann und immer rechtzeitig in Kraft gesetzt werden, wenn die Kapazität der erfindungsgemäßen Stabilisiervorrichtung nicht ausreichend ist, um die Schiffsbewegungen optimal zu unterdrücken.

Gemäß einer weiteren Ausführungsform der erfindungsgemäßen Stabilisiervorrichtung kann in der Steuereinrichtung die Kapazität der Konstantdruckpumpe zur Wiederauffüllung des Speichers nachgebildet sein und bei der Erzeugung des Steuersignals berücksichtigt werden.

Zur weiteren Optimierung des Betriebs der erfindungsgemäßen Stabilisiervorrichtung kann deren Steuereinrichtung ein Steuerteil aufweisen, mittels dem die zur Stabilisierung der Schiffsbewegungen anforderbare Leistung der Antriebseinrichtungen einstellbar ist. Hierdurch ist es möglich, daß gewisse Schriffbewegungen in Kauf genommen werden, um einen unverhältnismäßig hohen Aufwand zum Betrieb der Stabilisiervorrichtung zu vermeiden.

Wie bekannt, werden zur Stabilisierung von Schiffsbewegungen Stabilisierflossen entsprechend Steuersignalen aus ihrer Istin ihre Sollposition verstellt und die Steuersignale in Abhängigkeit von Meßsignalen erzeugt, die Rollbewegungen eines Schiffes entsprechen, wobei ein Rollwinkel und eine Rollwinkelgeschwindigkeit und/oder eine Rollwinkelbeschleunigung separat erfaßt oder ermittelt werden und jedes Steuersignal aus einer Rollwinkelkomponente und einer Rollwinkelgeschwindigkeitskomponente und/oder einer Rollwinkelbeschleunigungskomponente erzeugt wird, wobei der Anteil der Rollwinkelkomponente und der Rollwinkelgeschwindigkeitskomponente und/oder der Rollwinkelbeschleunigungskomponente am Steuersignal frei vorgegeben werden kann.

Für den Fall, daß eine für die Verstellung der Stabilisierflossen zur Verfügung stehende Antriebsleistung nicht ausreicht, um sowohl den Rollwinkel als auch die Rollwinkelgeschwindigkeit als auch die Rollwinkelbeschleunigung zu kompensieren, wird tendenziell zunächst die Kompensation des Rollwinkels, dann die der Rollwinkelgeschwindigkeit und dann die der Rollwinkelbeschleunigung reduziert.

Die Reduzierung der Kompensation der Rollwinkelgeschwindigkeit bzw. der Rollwinkelbeschleunigung kann bereits eingeleitet werden, bevor die Kompensation des Rollwinkels bzw. der Rollwinkelgeschwindigkeit vollständig reduziert ist.

Erfindungsgemäß ist es dabei möglich, die Steuersignale zusätzlich in Abhängigkeit von Meßsignalen zu erzeugen, die Stampfbewegungen des Schiffes entsprechen, wobei ein Stampfwinkel und/oder eine Stampfwinkelgeschwindigkeit und/oder eine Stampfwinkelbeschleunigung separat erfaßt und ermittelt werden; jedes Steuersignal wird mit einem die Stampfbewegung des Schiffes berücksichtigenden Signalteil aus einer Stampfwinkelkomponente und/oder einer Stampfwinkelgeschwindigkeitskomponente und/oder einer Stampfwinkelbeschleunigungskomponente erzeugt; der Anteil der Stampfwinkelkomponente und/oder der Stampfwinkelgeschwindigkeitskomponente und/oder der Stampfwinkelbeschleunigungskomponente am die Stampfbewegung des Schiffes berücksichtigenden Signalteil des Steuersignals kann frei vorgegeben werden.

Für den Fall, daß eine für die Verstellung der Stabilisierflossen zur Verfügung stehende Antriebsleistung nicht ausreicht, um sowohl den Stampfwinkel als auch die Stampfwinkelgeschwindigkeit als auch die Stampfwinkelbeschleunigung zu kompensieren, wird tendenziell zunächst die Kompensation des Stampfwinkels, dann die der Stampfwinkelgeschwindigkeit und dann die der Stampfwinkelbeschleunigung reduziert.

Die Reduzierung der Kompensation der Stampfwinkelgeschwindigkeit bzw. der Stampfwinkelbeschleunigung kann bereits eingeleitet werden, bevor die Kompensation des Stampfwinkels bzw. der Stampfwinkelgeschwindigkeit vollständig reduziert ist.

Für den Fall, daß eine für die Verstellung der Stabilisierflossen zur Verfügung stehende Antriebsleistung nicht ausreicht, um sowohl die Rollbewegung und/oder die Stampfbewegung des Schiffes zu kompensieren, wird tendenziell zunächst die Kompensation der Stampfbewegung reduziert.

Die Reduzierung der Kompensation der Rollbewegung kann eingeleitet werden, bevor die Kompensation der Stampfbewegung vollständig reduziert ist.

Darüber hinaus können die Steuersignale in Abhängigkeit von der Geschwindigkeit des Schiffes variiert werden.

Mit zunehmender Geschwindigkeit können die Steuersignale abgeschwächt werden.

Die anforderbare Leistung für die Verstellung der Stabilisierflossen kann in Abhängigkeit von der erforderlichen oder erwünschten Kompensation der Schiffsbewegungen variiert werden.

Im folgenden wird die Erfindung an Hand einer Ausführungsform unter Bezugnahme auf die Zeichnung näher erläutert: Es zeigen:
- FIG 1: eine Prinzipdarstellung einer Meßeinrichtung zur Erfassung der Rollbewegung eines Schiffes,
- FIG 2: eine Prinzipdarstellung einer Meßeinrichtung zur Erfassung der Stampfbewegung des Schiffes,
- FIG 3: in Prinzipdarstellung eine Meßeinrichtung zur Erfassung der Gierbewegung des Schiffes,
- FIG 4: eine Prinzipdarstellung einer Hydraulikanlage der erfindungsgemäßen Stabilisiervorrichtung und
- FIG 5 bis 7: beispielhaft die erfindungsgemäße Regelung zur Kompensation der Rollbewegung des Schiffes.

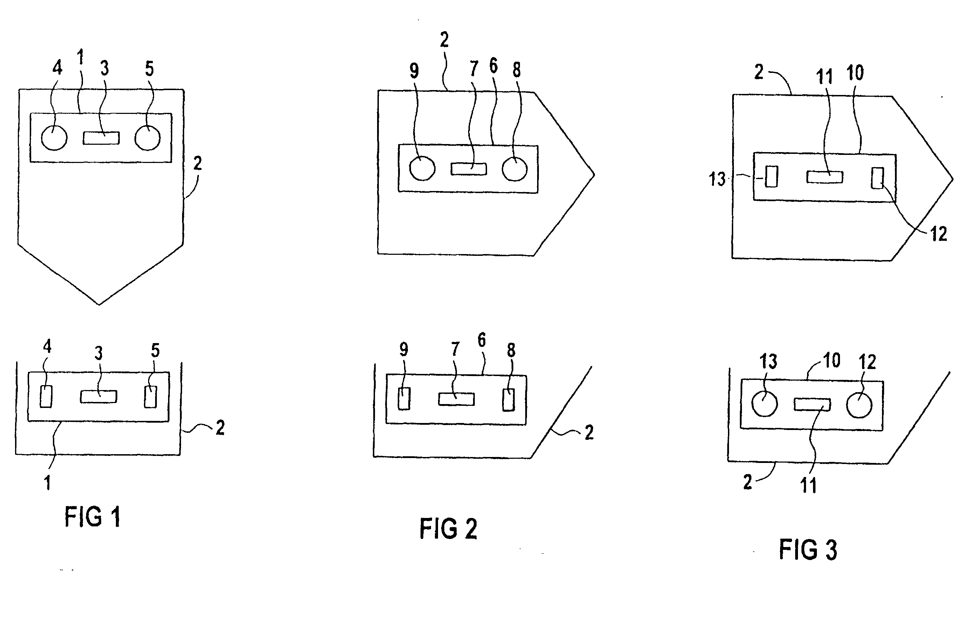

In FIG 1 ist eine Meßeinrichtung 1 zur Erfassung der Rollbewegung eines Schiffes 2 prinzipiell dargestellt. Die Meßeinrichtung 1 hat drei Beschleunigungsaufnehmer 3, 4, 5, von denen der mittlere 3 im Bereich der Schiffslängsachse und die beiden anderen 4, 5 möglichst weiter steuerbord- bzw. backbordseitig des Schiffes 2 angeordnet sind. Aufgrund dieser Anordnung der Beschleunigungsaufnehmer ergeben sich Meßsignale mit großer Genauigkeit und Auflösung.

Eine in FIG 2 dargestellte Meßeinrichtung 6 zur Erfassung der Stampfbewegung des Schiffes 2 hat ebenfalls drei Beschleunigungsaufnehmer 7, 8, 9, von denen einer im Bereich der Schiffslängsachse und die beiden anderen möglichst weit zum Bug bzw. zum Heck des Schiffes 2 hin versetzt angeordnet sind. Auch hierbei ergeben sich hinsichtlich der gewonnenen Meßsignale die im Zusammenhang mit der Meßeinrichtung 1 beschriebenen Vorteile.

Entsprechendes gilt für eine in FIG 3 dargestellte Meßeinrichtung 10 zur Erfassung der Gierbewegung mit Beschleunigungsaufnehmern 11, 12, 13, von denen der Beschleunigungsaufnehmer 11 etwa im Bereich der Schiffsquerachse und die beiden anderen Beschleunigungsaufnehmer 12, 13 zum Bug bzw. zum Heck des Schiffes 2 hin versetzt angeordnet sind.

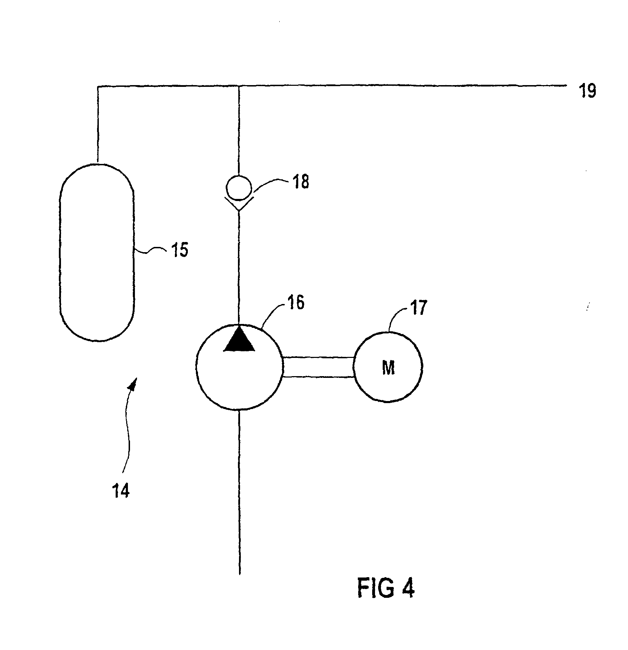

Eine in FIG 4 prinzipiell dargestellte Hydraulikanlage 14 hat einen Speicher 15 und eine Konstantdruckpumpe 16, die mittels eines Motors 17 betrieben wird.

Der Speicher 15 hat eine nicht dargestellte Gasblase, gegen die der Druck des Hydraulikfluids mittels der Konstantdruckpumpe 16 aufgebaut wird. Zwischen der Konstantdruckpumpe 16 und dem Speicher 15 ist ein Rückschlagventil 18 angeordnet. Die Konstantdruckpumpe 16 beaufschlagt den Speicher 15 soweit, bis der Druck im speicherseitigen Teil der Hydraulikanlage 14 größer als ein vorgebbarer Druck ist.

An die Hydraulikanlage 14 sind Antriebseinrichtungen 19 angeschlossen, welche der Verstellung nicht dargestellter Stabilisierflossen dienen. Hierzu sind selbstverständlich Ventilanordnungen u.dgl. vorgesehen, mittels denen die Bewegung der Stabiliserflossen steuer- und regelbar ist.

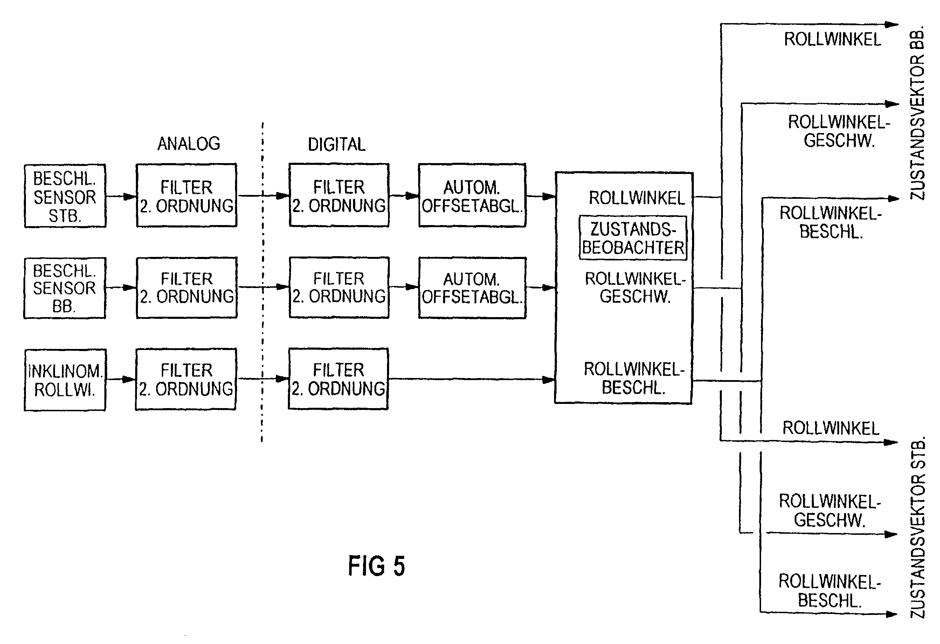

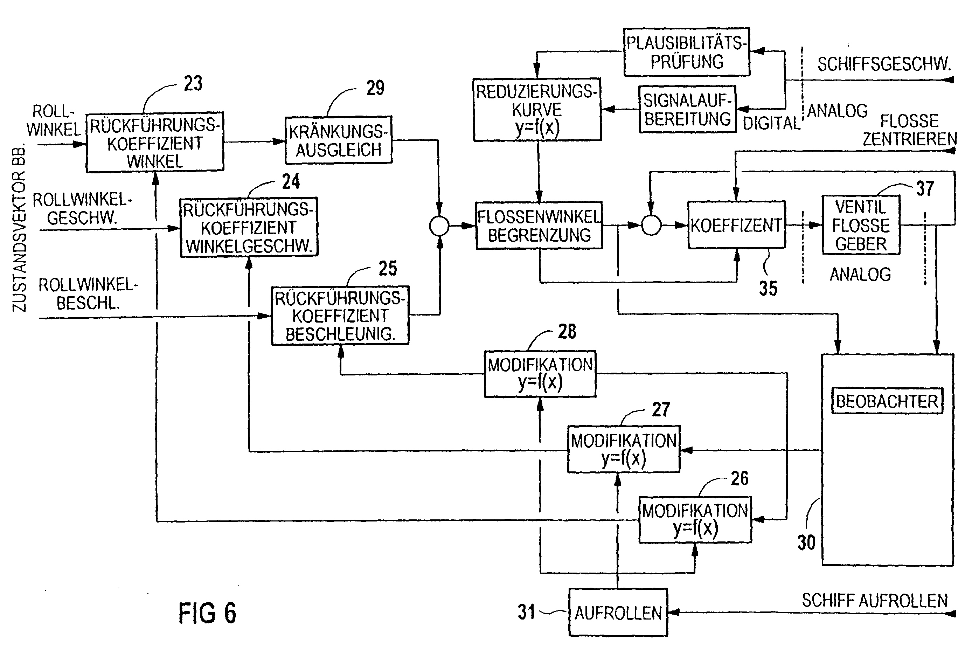

An Hand der FIG 5 bis 7 wird im folgenden prinzipiell die erfindungsgemäße Stabilisiervorrichtung beispielhaft bezüglich der Kompensation der Rollbewegung des Schiffes beschrieben.

Mittels des Steuerbord angeordneten Beschleunigungsaufnehmers 4 wird ein für die dort stattfindende Schwenkbewegung um die Schiffslängsachse charakteristisches Meßsignal zur Verfügung gestellt; entsprechend stellt der Backbord angeordnete Beschleunigungsaufnehmer 5 ein für die dort stattfindende Schwenkbewegung des Schiffes um die Schiffslängsachse charakteristisches Meßsignal zur Verfügung. Die beiden Beschleunigungsaufnehmer 4, 5 können beispielsweise in einem backbord- bzw. steuerbordseitigen Motorschaltkasten untergebracht werden. Der im Bereich der Schiffslängsachse angeordnete Beschleunigungsaufnehmer 3 dient zur Ermittlung der Schiffskrängung einschließlich der Querbeschleunigung; er ist hierzu auch als Inklinometer ausgebildet.

In einem Zustandsbeobachter 20 werden aus den Eingangsgrößen, nämlich der steuerbordseitigen Vertikalbeschleunigung, der backbordseitigen Vertikalbeschleunigung und der Schiffskrängung einschließlich der Querbeschleunigung die Rollbeschleunigung, die Rollgeschwindigkeit und der Rollwinkel errechnet.

Hierbei umgeht der Zustandsbeobachter 20 zur Bildung genannter Regelgrößen sowohl das Integrieren als auch das Differenzieren mit ihren spezifischen Nachteilen. Die erstellten Signale sind daher über einen sehr großen Frequenzbereich frei von Phasenfehlern.

Bei entsprechendem Seegang machen die Querbeschleunigungen des Schiffes das vom Beschleunigungsaufnehmer 3 zur Verfügung gestellte Inklinometer-Signal für eine direkte Verwendung unbrauchbar. Das vom Zustandsbeobachter 20 gewonnene Signal ist weitestgehend frei von dieser Komponente. Es eignet sich deshalb vorzüglich zur Rollwinkelstabilisierung. Der Zustandsbeobachter 20 bildet die dynamischen Eigenschaften der Rollbewegung des Schiffes algorithmisch nach. Die Signale der Beschleunigungsaufnehmer 3, 4, 5 bilden lediglich Korrekturwerte.

Um bei leichtem und mittlerem Seegang eine hohe Stabilisierwirkung von beispielsweise 90 % zu erreichen, sind große Regler- bzw. Rückführungskoeffizienten erforderlich; wie aus PIG 6, in der das Regelungsverfahren hinsichtlich des backbordseitigen Zustandsvektors beschrieben ist, hervorgeht, werden die im Zustandsbeobachter 20 errechneten Größen, nämlich der Rollwinkel, die Rollwinkelgeschwindigkeit und die Rollwinkelbeschleunigung, separat mit ihnen jeweils zugeordneten Rückführungskoeffizienten gewichtet, wie in den Funktionsschritten 23, 24, 25 dargestellt.

Bei See schräg von hinten und beim Ruderlegen entstehen Langsame Rollbewegungen, die ebenfalls große Rückführungs- bzw. Reglerkoeffizienten erfordern.

Bei schwerem Seegang ergeben sich dann jedoch Übersteuerungen der Stabilisierflossen. Dies führt zu einem Phasenfehler, der zur Folge hätte, daß die Stabilisierleistung der erfindungsgemäßen Stabilisiervorrichtung erheblich abnähme. Die in den Verfahrensschritten 23, 24, 25 ien Rollwinkel, die Rollwinkelgeschwindigkeit bzw. die Rollwinkelbeschleunigung wichtenden Regler- bzw. Rückführungskoeffizienten müssen daher seegangsabhängig angepaßt werden.

Bei dem erfindungsgemäß vorgesehenen Anpassungs- bzw. Adaptionsverfahren handelt es sich um eine geregelte Adaption. Als Führungsgröße fungiert hierbei eine Hilfsgröße, die etwas kleiner als die maximale Leistung der Hydraulikanlage 14 ist.

Als Regelgröße fungiert die von der Stabilisierflosse aufgenommene hydrauliche Leistung. Übersteigt diese den Wert der Hilfsgröße, erfolgt eine Reduzierung der Regler- bzw. Rückführungskoeffizienten, bis die von der Stabilisierflosse geforderte Leistung der verfügbaren Leistung angepaßt ist.

Diese Anpassung erfolgt sehr schnell - innerhalb einer Bewegung der Stabilisierflosse von Nase oben bis Nase unten -. So wird ein Phasenfehler wegen übersteuerter Stabilisierflosse sicher vermieden, wobei jede Stabilisierflosse eine eigene von anderen Stabilisierflossen unabhängig Adaption aufweist. Diese geregelte Adaption ist sehr unempfindlich gegenüber Parameterschwankungen.

In Abhängigkeit von der Leistung der Stabilisierflossen wird die Gewichtung der einzelnen Zustandsgrößen, nämlich des Rollwinkels, der Rollwinkelgeschwindigkeit und der Rollwinkelbeschleunigung, individuell variiert. Dabei soll die verfügbare Flossenleistung optimal ausgenutzt werden. Beispielsweise wird bei schwerer See zunächst der Anteil des Rollwinkels zugunsten desjenigen der Rollwinkelgeschwindigkeit bzw. der Rollwinkelbeschleunigung reduziert, da der erstere eine übermäßig große hydraulische Leistung erfordert.

Der Adaptionsausgang wird auf Funktionen gegeben, mit denen die individuellen Regler- bzw. Rückführungskoeffizienten bestimmt werden, und zwar in den Verfahrensschritten 26, 27, 28.

Bezüglich des Rollwinkels findet zusätzlich noch ein Krängungsausgleich im Verfahrensschritt 29 statt.

Bei den die jeweiligen Regler- bzw. Rückführungskoeffizienten bestimmenden Modifikations-Verfahrensschritten 26, 27, 28 werden von einem Beobachter 13 zur Verfügung gestellte Informationen hinsichtlich der Position der jeweiligen Stabilisierflosse und hinsichtlich der Flossenwinkelbegrenzung berücksichtigt. Darüber hinaus wird durch den Verfahrensschritt 31 das Aufrollen des Schiffes bei den Modifikations-Verfahrensschritten 26, 27, 28 zugrundegelegt.

Der letztlich nach einem Verfahrensschritt 35 auf einen Lagegeber 37 der Stabilisierflosse gegebene Koeffizient bzw. die daraus resultierende Position der Stabilisierflosse wird vom Beobachter 30 erfaßt und der Regelung zugrundegelegt.

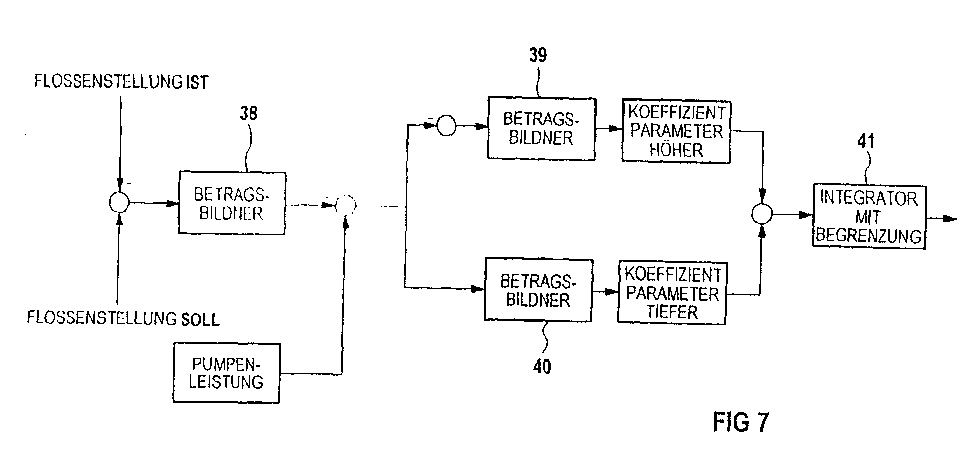

Die Differenz zwischen der IST-Flossenstellung und der SOLL-Flossenstellung wird, wie sich aus FIG 7 ergibt, einer Betragsbildung 38 unterzogen und mit der zur Verfügung stehenden Leistung der Hydraulikanlage 14 verglichen. Sie bildet ein Maß für die abgeforderte hydraulische Leistung.

Über Betragsbildner 39, 40 wird der Koeffizient unter Berücksichtigung der Parameter höher oder tiefer eingestellt und dann über einen Integrator 41 mit Begrenzung weitergegeben.

Mit der vorstehend geschilderten erfindungsgemäßen Stabilisiervorrichtung zum Ausgleich bzw. zur Reduzierung von Rollbewegungen des Schiffes ergeben sich sowohl bei kurzen Wellen, d.h. See schräg von vorne, als auch bei langen Wellen, d.h. See schräg von achtern, hohe Stabilisierleistungen. Automatische Anpassung der Regelung an die jeweiligen Schiffs-, Flossen- und Seegangsparameter durch separate Gewichtung aller Zustandsgrößen ist gewährleistet. Die Reglerkoeffizienten werden jeweils auf einen maximalen Wert begrenzt. Die Werte entsprechen der optimalen Stabilisierung bei leichter See und sind weit vom Stabilitätsrand entfernt. Durch die Adaption können die Reglerkoeffizienten nur verkleinert werden.

Mit der automatischen Adaption wird die zur Verfügung stehende Leistung der Stabilisierflossen bei allen Seegangsverhältnissen im Hinblick auf hohe Stabilisierleistung optimal genutzt. Bei geringem und mittlerem Seegang wird beispielsweise eine Rollreduzierung von bis zu 90 % erreicht. Bei schwerem Seegang wird ein Übersteuern der Stabilisierflossen verhindert.

## Patentansprüche

1. Stabilisiervorrichtung für Schiffsbewegungen, mit verstellbaren Stabilisierflossen, Antriebseinrichtungen (37), mittels denen die Position der Stabilisierflossen verstellbar ist, einer Steuereinrichtung (20 bis 41), mittels der den Sollpositionen der jeweiligen Stabilisierflosse entsprechende Steuersignale erzeug- und an die jeweilige Antriebseinrichtung (37) anlegbar sind, und einer Meßeinrichtung (1), mittels der Rollbewegungen eines Schiffes erfaß-, den erfaßten Rollbewegungen entsprechende Meßsignale erzeug- und an die Steuereinrichtung anlegbar sind, wobei die Steuereinrichtung so ausgebildet ist, daß ein Rollwinkel und eine Rollwinkelgeschwindigkeit und/oder eine Rollwinkelbeschleunigung als Meßgrößen separat erfaß- bzw. aus Meßgrößen separat ermittelbar sind, daß ein zur Kompensation der Rollbewegung des Schiffes in der Steuereinrichtung erzeugtes Steuersignal aus einer Rollwinkelkomponente und einer Rollwinkelgeschwindigkeitskomponente und/oder einer Rollwinkelbeschleunigungskomponente zusammensetzbar ist, und daß die Anteile der Rollwinkelkomponente und der Rollwinkelgeschwindigkeitskomponente und/oder der Rollwinkelbeschleunigungskomponente am Steuersignal frei vorgebbar sind, **dadurch gekennzeichnet, daß** die Stabilisiervorrichtung eine weitere Meßeinrichtung (6) aufweist, mittels der Stampfbewegungen des Schiffes erfaß-, den erfaßten Stampfbewegungen entsprechende Meßsignale erzeug- und an die Steuereinrichtung anlegbar sind, die so ausgebildet ist, daß ein Stampfwinkel und/oder eine Stampfwinkelgeschwindigkeit und/oder eine Stampfwinkelbeschleunigung als Meßgrößen separat erfaß- bzw. aus Meßgrößen separat ermittelbar sind, daß ein zur Kompensation der Stampfbewegung des Schiffes in der Steuereinrichtung erzeugter Signalteil des Steuersignals aus einer Stampfwinkelkomponente und/oder einer Stampfwinkelgeschwindigkeitskomponente und/oder einer Stampfwinkelbeschleunigungskomponente zusammensetzbar ist, und daß die Anteile der Stampfwinkelkomponente und/oder der Stampfwinkelgeschwindigkeitskomponente und/oder der Stampfwinkelbeschleunigungskomponente am zur Kompensation der Stampfbewegung erzeugten Signalteil des Steuersignals frei vorgebbar sind.

2. Stabilisiervorrichtung nach Anspruch 1, bei der zur Erfassung der Roll- und/oder Gier- und/oder der Stampfbewegungen des Schiffes dienende Meßeinrichtungen (1, 6,10) als Beschleunigungsaufnehmer (3,4,5,7,8,9,11,12,13) ausgebildet sind.

3. Stabilisiervorrichtung nach einem der Ansprüche 1 oder 2, bei der zur Erfassung der Rollbewegung des Schiffes drei Beschleunigungsaufnehmer (3,4,5) vorgesehen sind, von denen einer (3) im Bereich der Schiffslängsachse und die beiden anderen (4,5) möglichst weit backbord- bzw. steuerbordseitig angeordnet sind.

4. stabilisiervorrichtung nach einem der Ansprüche 2 oder 3, bei der zur Erfassung der Stampfbewegung des Schiffes drei Beschleunigungsaufnehmer (7, 8, 9) vorgesehen sind, von denen einer (7) im Bereich der Schiffslängsachse und die beiden anderen (8,9) möglichst weit zum Bug bzw. zum Heck des Schiffes hin versetzt angeordnet sind.

5. Stabilisiervorrichtung nach einem der Ansprüche 2 bis 4, bei der zur Erfassung der Gierbewegung des Schiffes drei Beschleunigungsaufnehmer (11,12,13) vorgesehen sind, von denen einer (11) im Bereich der Schiffsquerachse und die beiden anderen (12,13) möglichst weit zum Bug bzw. zum Heck des Schiffes hin versetzt angeordnet sind.

6. Stabilisiervorrichtung nach einem der Ansprüche 4 oder 5, bei der ein oder mehrere Beschleunigungsaufnehmer so ausgebildet und angeordnet sind, daß sie zur Erfassung der Rollund/oder der Gier- und/oder der Stampfbewegung des Schiffes einsetzbar sind.

7. Stabilisiervorichtung nach einem der Ansprüche 1 bis 6, bei der die Antriebseinrichtungen (19;37) zur Verstellung der Stabilisierflossen Bestandteile einer Hydraulikanlage (14) mit einem Speicher (15) und einer Konstantdruckpumpe (16) sind und in der Steuereinrichtung der aktuelle Füllungsgrad des Speichers (15) der Hydraulikanlage (14) als Meßgröße erfaßbar und bei der Erzeugung des Steuersignals berücksichtigbar ist.

8. Stabilisiervorrichtung nach Anspruch 7, bei der in der Steuereinrichtung die Kapazität der Konstantdruckpumpe (16), mittels der der Füllungsgrad des Speichers (15) erhöhbar ist, abgespeichert und bei der Erzeugung des Steuersignals berücksichtigbar ist.

9. Stabilisiervorrichtung nach einem der Ansprüche 1 bis 8, mit einem Steuerteil, mittels dem die zur Stabilisierung der Schiffsbewegungen anforderbare Leistung der Antriebseinrichtungen einstellbar ist.

10. Verfahren zur Stabilisierung von Schiffsbewegungen, bei dem Stabilisierflossen entsprechend Steuersignalen aus ihrer Ist- in ihre Sollposition verstellt werden und die Steuersignale in Abhängigkeit von Meßsignalen erzeugt werden, die Rollbewegungen eines Schiffes entsprechen, wobei ein Rollwinkel und eine Rollwinkelgeschwindigkeit und/oder eine Rollwinkelbeschleunigung separat erfaßt oder ermittelt werden, und daß jedes Steuersignal aus einer Rollwinkelkomponente und einer Rollwinkelgeschwindigkeitskomponente und/oder einer Rollwinkelbeschleunigungskomponente erzeugt wird, wobei der Anteil der Rollwinkelkomponente und/oder der Rollwinkelgeschwindigkeitskomponente und/oder der Rollwinkelbeschleunigungskomponente am Steuersignal frei vorgegeben werden kann, **dadurch gekennzeichnet, daß** für den Fall, daß eine für die Verstellung der Stabilisierflossen zur Verfügung stehende Antriebsleistung nicht ausreicht, um sowohl den Rollwinkel als auch die Rollwinkelgeschwindigkeit als auch die Rollwinkelbeschleunigung zu kompensieren, tendenziell zunächst die Kompensation des Rollwinkels, dann die der Rollwinkelgeschwindigkeit und dann die der Rollwinkelbeschleunigung reduziert wird.

11. Verfahren nach Anspruch 10, bei dem die Reduzierung der Kompensation der Rollwinkelgeschwindigkeit bzw. der Rollwinkelbeschleunigung eingeleitet wird, bevor die Kompensation des Rollwinkels bzw. der Rollwinkelgeschwindigkeit vollständig reduziert wird.

12. Verfahren nach einem der Ansprüche 10 oder 11, bei dem die Steuersignale auch in Abhängigkeit von Meßsignalen erzeugt werden, die Stampfbewegungen des Schiffes entsprechen, ein Stampfwinkel und/oder eine Stampfwinkelgeschwindigkeit und/ oder eine Stampfwinkelbeschleunigung separat erfaßt oder ermittelt werden und jedes Steuersignal mit einem die Stampfbewegung des Schiffes berücksichtigenden Signalteil aus einer Stampfwinkelkomponente und/oder einer Stampfwinkelgeschwindigkeitskomponente und/oder einer Stampfwinkelbeschleunigungskomponente erzeugt wird, wobei der Antel der Stampfwinkelkomponente und/oder der Stampfwinkelgeschwindigkeitskomponente und/oder der Stampfwinkelbeschleunigungskomponente am die Stampfbewegung des Schiffes berücksichtigenden Signalteil des Steuersignals frei vorgegeben werden kann.

13. Verfahren nach Anspruch 12, bei dem für den Fall, daß eine für die Verstellung der Stabilisierflossen zur Verfügung stehende Antriebsleistung nicht ausreicht, um sowohl den Stampfwinkel als auch die Stampfwinkelgeschwindigkeit als auch die Stampfwinkelbeschleunigung zu kompensieren, tendenziell zunächst die Kompensation des Stampfwinkels, dann die der Stampfwinkelgeschwindigkeit und dann die der Stampfwinkelbeschleunigung reduziert wird.

14. Verfahren nach Anspruch 13, bei dem die Reduzierung der Kompensation der Stampfwinkelgeschwindigkeit bzw. der Stampfwinkelbeschleunigung eingeleitet wird, bevor die Kompensation des Stampfwinkels bzw. der Stampfwinkelgeschwindigkeit vollständig reduziert wird.

15. Verfahren nach einem der Ansprüche 10 bis 15, bei dem die anforderbare Leistung für die Verstellung der Stabilisierflossen in Abhängigkeit von einer erforderlichen oder erwünschten Kompensation der Schiffsbewegungen variert wird.

## Claims

1. Stabilization apparatus for ship movements, having adjustable stabilizers, drive devices (37) by means of which the position of the stabilizers can be adjusted, a control device (20 to 41) by means of which control signals corresponding to the required positions of the respective stabilizers can be produced and can be applied to the respective drive device (37), and having a measurement device (1) by means of which rolling movements of a ship can be detected and measurement signals corresponding to the detected rolling movements can be produced and can be applied to the control device, wherein the control device is designed such that a roll angle and a roll angle rate and/or a roll angle acceleration can be detected separately as measured variables or can be determined separately from measured variables, such that a control signal which is produced in the control device in order to compensate for the rolling movement of the ship can be formed from a roll angle component and a roll angle rate component and/or a roll angle acceleration component, and such that the elements of the roll angle component and of the roll angle rate component and/or of the roll angle acceleration component can be preset as required in the control signal, **characterized in that** the stabilization apparatus has a further measurement device (6) by means of which pitching movements of the ship can be detected, measurement signals corresponding to the detected pitching movements can be produced and can be applied to the control device, which is designed such that a pitch angle and/or a pitch angle rate and/or a pitch angle acceleration can be detected separately as measured variables or can be determined separately from measured variables, such that a signal part of the control signal which is produced in the control device in order to compensate for the pitching movement of the ship can be formed from a pitch angle component and/or a pitch angle rate component and/or a pitch angle acceleration component, and such that the elements of the pitch angle component and/or of the pitch angle rate component and/or of the pitch angle acceleration component can be preset as required **in that** signal part of the control signal which is produced in order to compensate for the pitching movement.

2. Stabilization apparatus according to Claim 1, in which measurement devices (1, 6, 10) which are used to detect the rolling and/or yawing and/or pitching movements of the ship are in the form of acceleration sensors (3, 4, 5, 7, 8, 9, 11, 12, 13).

3. Stabilization apparatus according to one of Claims 1 or 2, in which three acceleration sensors (3, 4, 5) are provided in order to detect the rolling movement of the ship, one (3) of which is arranged in the region of the ship's longitudinal axis and the two others (4, 5) of which are arranged as far as possible to port and starboard, respectively.

4. Stabilization apparatus according to one of Claims 2 or 3, in which three acceleration sensors (7, 8, 9) are provided to detect the pitching movement of the ship, one (7) of which is arranged in the region of the ship's longitudinal axis, and the two others (8, 9) of which are arranged offset as far as possible towards the bow and stern of the ship, respectively.

5. Stabilization apparatus according to one of Claims 2 to 4, in which three acceleration sensors (11, 12, 13) are provided to detect the yawing movement of the ship, one (11) of which is arranged in the region of the ship's lateral axis, and the two others (12, 13) of which are arranged offset as far as possible towards the bow and stern of the ship, respectively.

6. Stabilization apparatus according to one of Claims 4 or 5, in which one or more acceleration sensors are designed and arranged such that they can be used to detect the rolling and/or yawing and/or pitching movement of the ship.

7. Stabilization apparatus according to one of Claims 1 to 6, in which the drive devices (19; 37) for moving the stabilizers are components of a hydraulic system (14) having a reservoir (15) and a constant-pressure pump (16), and the actual filling level of the reservoir (15) of the hydraulic system (14) can be detected as a measured variable, and can be taken into account in the production of the control signal, in the control device.

8. Stabilization apparatus according to Claim 7, in which the capacity of the constant-pressure pump (16), by means of which the filling level of the reservoir (15) can be increased, is stored, and can be taken into account in the production of the control signal, in the control device.

9. Stabilization apparatus according to one of Claims 1 to 8, having a control section by means of which the drive device power which may be required in order to stabilize the ship movements is adjustable.

10. Method for stabilization of ship movements, in which stabilizers are moved from their actual position to their required position corresponding to control signals, and the control signals are produced as a function of measurement signals which correspond to rolling movements of a ship, wherein a roll angle and a roll angle rate and/or a roll angle acceleration are detected or determined separately, and each control signal is produced from a roll angle component and a roll angle rate component and/or a roll angle acceleration component, wherein the element of the roll angle component and/or of the roll angle rate component and/or of the roll angle acceleration component can be preset as required in the control signal, **characterized in that** in the situation where the drive power available for movement of the stabilizers is insufficient to compensate not only for the roll angle but also for the roll angle rate and for the roll angle acceleration, the intended approach is firstly to reduce the compensation for the roll angle, then the compensation for the roll angle rate, and then the compensation for the roll acceleration.

11. Method according to Claim 10, in which the reduction in the compensation for the roll angle rate and for the roll angle acceleration is introduced before the compensation for the roll angle and for the roll angle rate has been reduced completely.

12. Method according to one of Claims 10 or 11, in which the control signals are also produced as a function of measurement signals which correspond to pitching movements of the ship, a pitch angle and/or a pitch angle rate and/or a pitch angle acceleration are detected or determined separately, and each control signal is produced with a signal part, which takes account of the pitching movement of the ship, from a pitch angle component and/or a pitch angle rate component and/or a pitch angle acceleration component, wherein the element of the pitch angle component and/or of the pitch angle rate component and/or of the pitch angle acceleration component can be preset as required in that signal part of the control signal which takes account of the pitching movement of the ship.

13. Method according to Claim 12, in which, in the situation where the drive power available for movement of the stabilizers is insufficient to compensate not only for the pitch angle but also for the pitch angle rate and for the pitch angle acceleration, the intended approach is firstly to reduce the compensation for the pitch angle, then the compensation for the pitch angle rate, and then the compensation for the pitch angle acceleration.

14. Method according to Claim 13, in which the reduction in the compensation for the pitch angle rate and for the pitch angle acceleration is introduced before the compensation for the pitch angle and for the pitch angle rate has been reduced completely.

15. Method according to one of Claims 10 to 15, in which the power which may be required to move the stabilizes is varied as a function of any required or desired compensation for the ship movements.

## Revendications

1. Dispositif de stabilisation pour les mouvements d'un bateau, comprenant des ailerons stabilisateurs mobiles, des organes (37) d'entraînement qui permettent de modifier la position des ailerons stabilisateurs, une unité (20 à 41) de commande qui permet de produire des signaux de commande correspondant aux positions requises de l'aileron stabilisateur respectif et de les appliquer à l'organe (37) d'entraînement respectif, et un équipement (1) de mesure, qui permet de détecter les mouvements de roulis d'un bateau, de produire des signaux de mesure correspondant aux mouvements de roulis détectés, et de les appliquer à l'unité de commande, l'unité de commande étant conçue de telle sorte qu'un angle de roulis et une vitesse angulaire de roulis et/ou une accélération angulaire de roulis peuvent être détectés séparément en tant que variables mesurées ou déterminés séparément à partir de variables mesurées, qu'un signal de commande, produit dans l'unité de commande afin de compenser le mouvement de roulis du bateau, peut être composé à partir d'une composante d'angle de roulis et d'une composante de vitesse angulaire de roulis et/ou d'une composante d'accélération angulaire de roulis, et que les parts, dans le signal de commande, de la composante d'angle de roulis et de la composante de vitesse angulaire de roulis et/ou de la composante d'accélération angulaire de roulis peuvent être librement prescrites,
**caractérisé en ce que** le dispositif de stabilisation comporte un équipement (6) supplémentaire de mesure, qui permet de détecter les mouvements de tangage d'un bateau, de produire des signaux de mesure correspondant aux mouvements de tangage détectés, et de les appliquer à l'unité de commande, laquelle est conçue de telle sorte qu'un angle de tangage et une vitesse angulaire de tangage et/ou une accélération angulaire de tangage peuvent être détectés séparément en tant que variables mesurées ou déterminés séparément à partir de variables mesurées, qu'une partie de signal du signal de commande, produite dans l'unité de commande afin de compenser le mouvement de tangage du bateau, peut être composée à partir d'une composante d'angle de tangage et/ou d'une composante de vitesse angulaire de tangage et/ou d'une composante d'accélération angulaire de tangage, et que les parts, dans la partie de signal du signal de commande qui est produite afin de compenser le mouvement de tangage, de la composante d'angle de tangage et/ou de la composante de vitesse angulaire de tangage et/ou de la composante d'accélération angulaire de tangage peuvent être librement prescrites.

2. Dispositif de stabilisation suivant la revendication 1, dans lequel des équipements (1, 6, 10) de mesure servant à détecter les mouvements de roulis et/ou d'embardée et/ou de tangage du bateau sont conçus comme capteurs (3, 4, 5, 7, 8, 9, 11, 12, 13) d'accélération.

3. Dispositif de stabilisation suivant la revendication 1 ou 2, dans lequel il est prévu trois capteurs (3, 4, 5) d'accélération pour détecter le mouvement de roulis du bateau, dont l'un (3) est disposé dans la région de l'axe longitudinal du bateau et les deux autres (4, 5) le plus possible respectivement à bâbord et à tribord.

4. Dispositif de stabilisation suivant la revendication 2 ou 3, dans lequel il est prévu trois capteurs (7, 8, 9) d'accélération pour détecter le mouvement de tangage du bateau, dont l'un (7) est disposé dans la région de l'axe longitudinal du bateau et les deux autres (8, 9) le plus possible décalés respectivement vers la proue et vers la poupe du bateau.

5. Dispositif de stabilisation suivant l'une des revendications 2 à 4, dans lequel il est prévu trois capteurs (11, 12, 13) d'accélération pour détecter le mouvement d'embardée du bateau, dont l'un (11) est disposé dans la région de l'axe transversal du bateau et les deux autres (12, 13) le plus possible décalés respectivement vers la proue et vers la poupe du bateau.

6. Dispositif de stabilisation suivant la revendication 4 ou 5, dans lequel un ou plusieurs capteurs d'accélération sont conçus et disposés de telle sorte qu'ils peuvent être utilisés pour détecter le mouvement de roulis et/ou d'embardée et/ou de tangage du bateau.

7. Dispositif de stabilisation suivant l'une des revendications 1 à 6, dans lequel les organes (19 ; 37) d'entraînement pour déplacer les ailerons stabilisateurs sont des éléments d'un système (14) hydraulique comportant un réservoir (15) et une pompe (16) à pression constante, et l'unité de commande peut détecter en tant que variable mesurée le degré actuel de remplissage du réservoir (15) du système (14) hydraulique, et en tenir compte dans la production du signal de commande.

8. Dispositif de stabilisation suivant la revendication 7, dans lequel l'unité de commande mémorise la capacité de la pompe (16) à pression constante qui permet d'augmenter le degré de remplissage du réservoir (15), et peut en tenir compte dans la production du signal de commande.

9. Dispositif de stabilisation suivant l'une des revendications 1 à 8, comportant une section de commande qui permet de régler la puissance des organes d'entraînement qui peut être exigée pour stabiliser les mouvements du bateau.

10. Procédé de stabilisation pour les mouvements d'un bateau, suivant lequel des ailerons stabilisateurs sont déplacés de leur position actuelle dans leur position requise conformément à des signaux de commande, et les signaux de commande sont produits en fonction de signaux de mesure qui correspondent à des mouvements de roulis d'un bateau, un angle de roulis et une vitesse angulaire de roulis et/ou une accélération angulaire de roulis étant séparément détectés ou déterminés, et chaque signal de commande étant produit à partir d'une composante d'angle de roulis et d'une composante de vitesse angulaire de roulis et/ou d'une composante d'accélération angulaire de roulis, la part, dans le signal de commande, de la composante d'angle de roulis et/ou de la composante de vitesse angulaire de roulis et/ou de la composante d'accélération angulaire de roulis pouvant être librement prescrite,
**caractérisé en ce que**, si une puissance d'entraînement disponible pour déplacer les ailerons stabilisateurs n'est pas suffisante pour compenser à la fois l'angle de roulis, la vitesse angulaire de roulis et l'accélération angulaire de roulis, on tend à réduire d'abord la compensation de l'angle de roulis, puis celle de la vitesse angulaire de roulis, et enfin celle de l'accélération angulaire de roulis.

11. Procédé suivant la revendication 10, suivant lequel la réduction de la compensation de la vitesse angulaire de roulis ou respectivement de l'accélération angulaire de roulis est déclenchée avant que la compensation de l'angle de roulis ou respectivement de la vitesse angulaire de roulis soit complètement réduite.

12. Procédé suivant la revendication 10 ou 11, suivant lequel les signaux de commande sont produits également en fonction de signaux de mesure qui correspondent aux mouvements de tangage du bateau, un angle de tangage et/ou une vitesse angulaire de tangage et/ou une accélération angulaire de tangage sont séparément détectés ou déterminés, et chaque signal de commande est produit avec une partie de signal prenant en compte le mouvement de tangage du bateau, composée d'une composante d'angle de tangage et/ou d'une composante de vitesse angulaire de tangage et/ou d'une composante d'accélération angulaire de tangage, la part, dans la partie de signal du signal de commande qui prend en compte le mouvement de tangage du bateau, de la composante d'angle de tangage et/ou de la composante de vitesse angulaire de tangage et/ou de la composante d'accélération angulaire de tangage pouvant être librement prescrite.

13. Procédé suivant la revendication 12, suivant lequel, si une puissance d'entraînement disponible pour déplacer les ailerons stabilisateurs n'est pas suffisante pour compenser à la fois l'angle de tangage, la vitesse angulaire de tangage et l'accélération angulaire de tangage, on tend à réduire d'abord la compensation de l'angle de tangage, puis celle de la vitesse angulaire de tangage, et enfin celle de l'accélération angulaire de tangage.

14. Procédé suivant la revendication 13, suivant lequel la réduction de la compensation de la vitesse angulaire de tangage ou respectivement de l'accélération angulaire de tangage est déclenchée avant que la compensation de l'angle de tangage ou respectivement de la vitesse angulaire de tangage soit complètement réduite.

15. Procédé suivant l'une des revendications 10 à 14, suivant lequel on fait varier la puissance, qui peut être exigée pour déplacer les ailerons stabilisateurs, en fonction d'une compensation nécessaire ou souhaitée des mouvements du bateau.
